# EUROPEAN PATENT SPECIFICATION

(11) **EP 3 813 459 B1**
(45) Date of publication and mention of the grant of the patent: **19.07.2023**
(21) Application number: 19204860.1
(22) Date of filing: 23.10.2019
(51) Int. Cl.: H04W 72/543, H04W 4/70, H04W 72/1268

(54) **TERMINAL UNIT, METHOD TO OPERATE A TERMINAL UNIT, PROCESSING MACHINE, SCHEDULING UNIT, AND METHOD TO OPERATE A SCHEDULING UNIT**
ENDGERÄTEEINHEIT, VERFAHREN ZUM BETRIEB EINER ENDGERÄTEEINHEIT, VERARBEITUNGSMASCHINE, PLANUNGSEINHEIT UND VERFAHREN ZUM BETRIEB EINER PLANUNGSEINHEIT
UNITÉ DE TERMINAL, PROCÉDÉ DE FONCTIONNEMENT D'UNE UNITÉ DE TERMINAL, MACHINE DE TRAITEMENT, UNITÉ DE PROGRAMMATION ET PROCÉDÉ DE FONCTIONNEMENT D'UNE UNITÉ DE PROGRAMMATION

(43) Date of publication of application: 28.04.2021
(73) Proprietor: Robert Bosch GmbH, 70442 Stuttgart (DE)
(72) Inventor: Von Hoyningen-Huene, Johannes, 71063 Sindelfingen (DE); Schildt, Sebastian, 71287 Weissach (DE); Hansen, Thomas, 31139 Hildesheim (DE); Marchenko, Nikolaj, 70180 Stuttgart (DE); Kawan, Frank, 74074 Heilbronn (DE)

(56) References cited:
- US-A1- 2014 313 908
- US-A1- 2017 208 612
- INTEL CORPORATION: "Enhancements to SR targeting low latency requirements", 3GPP DRAFT; R1-1707406 INTEL SR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051272616, Retrieved from the Internet: URL:http://www.3gpp.org/ftp/Meetings_3GPP_ SYNC/RAN1/Docs/ [retrieved on 2017-05-14]
- GOTSIS A G ET AL: "M2M Scheduling over LTE: Challenges and New Perspectives", IEEE VEHICULAR TECHNOLOGY MAGAZINE, IEEE, US, vol. 7, no. 3, 1 September 2012 (2012-09-01), pages 34-39, XP011476670, ISSN: 1556-6072, DOI: 10.1109/MVT.2012.2204544

## Description

### State of the art

The invention is directed to a terminal unit, a method to operate a terminal unit, a processing machine, a scheduling unit, and a method to operate a scheduling unit.

Wireless connectivity with low latency and high reliability communication (URLLC) capabilities is seen as one of the main cornerstones of the Connected Industry, or Industrie 4.0. Currently, 3GPP organization actively standardizes such URLLC mode within the 5G communication standard. The URLLC mode targets to support cycle times of down to 1ms. Such low latency communication is often required by manufacturing machinery, e.g., robot arms, milling or welding machine, and etc. To guarantee such low latency, network resources (i.e. medium access time, time slot, bandwidth, etc.) required for quick data frame delivery have to be readily available. This is typically done by reservation of resources for particular applications or traffic type at the central scheduler at the base station. In particular, for cyclic traffic of control applications, guaranteed periodic medium access has to be provided to guarantee data delivery within the deadline.

US 2014/0313908 A1 discloses a method for reducing signaling overhead related to scheduling of uplink and downlink radio resources to wireless devices (e.g., sensors or Machine-to-Machine (M2M) devices) that are primarily stationary in a cellular network. Because these wireless devices are non-moving, time-frequency channel conditions have a much lower variance for them as compared to other mobile devices in the network. Hence, the (semi)stationary channel can be estimated over time with the help of statistical methods and machine learning techniques, and stationary devices can be then instructed to stop reporting uplink and/or downlink channel condition related information to the network until further notice. When performance degradation is noticed by the base station, the scheduler may instruct the device to resume its channel condition reporting. As a byproduct of this solution, the energy consumed within such stationary terminals is reduced due to significant reductions in the number of channel measurements, their processing, and reporting.

### Disclosure of the invention

The problems of the prior art are solved by a terminal unit according to claim 1, a method to operate a terminal unit according to a further claim 4, a processing machine according to a further claim 3, a scheduling unit according to a further claim 5, and a method to operate a scheduling unit according to a further claim 7.

According to a first aspect of the description a terminal unit of a cellular radio network for wireless M2M communication is provided, wherein the terminal unit comprises at least one processing circuitry, at least one communication circuitry and at least one antenna, the processing circuitry being configured together with the at least one communication circuitry and the at least one antenna to cause the terminal unit to determine or receive a first QoS requirement for a distributed machine control application, wherein the first QoS requirement depends on a present operational status of the distributed machine control application; transmit the first QoS requirement via an uplink control channel towards a scheduling unit; receive a downlink scheduling control message via a downlink control channel originating from the scheduling unit in response to the transmitted first QoS requirement, the downlink scheduling control message indicating a plurality of exclusively reserved first radio resources of a shared radio channel; and transmit first M2M data of the distributed machine control application via the at least one of the exclusively reserved first radio resources of the shared radio channel.

In other word, a radio resource reservation method is provided aimed at cyclic control traffic in industrial automation applications, such as robot and machinery control. In the proposed method, the radio resources are reserved for such critical control applications, to provide the required short cycle times and strict delivery deadline guarantees.

Therefore, the proposed access scheme provides strict resource reservation, which provides the required QoS in terms of latency. As the first QoS requirement depends on the operational status of the distributed machine control application it makes the use of radio resources more flexible. In particular the proposed access scheme prevents resource overutilization when the distributed machine control application does not need high delivery guarantees such low cycle times, which is the case e.g., when the connected machine run slow, or has idle phases.

In summary, the proposed access scheme increases the efficiency of the utilization of radio resources. This is particularly important for the upcoming 5G networks, since only very limited bandwidth will become available with local 5G licenses for factory automation. Therefore, the available spectrum is used more efficiently.

According to an advantageous example, the terminal unit is further configured to determine or receive a temporarily reduced second QoS requirement for the distributed machine control application ; transmit the temporarily reduced second QoS requirement via the uplink control channel towards the scheduling unit; receive a downlink scheduling control message via a downlink control channel originating from the scheduling unit in response to the transmitted second QoS requirement, the downlink scheduling control message indicating a plurality of exclusively reserved second radio resources of the shared radio channel; and transmit second M2M data of the distributed machine control application via the at least one of the exclusively reserved second radio resources of the shared radio channel.

With the second QoS requirement, the access scheme provides a way to release reserved resources when they are not used by the distributed machine control application. These resources may be re-allocated efficiently to other network participants.

According to an advantageous example, the terminal unit is further configured to determine a time period the temporarily reduced second QoS requirement is valid; transmit the time period via the uplink control channel towards the scheduling unit; receive a downlink scheduling control message via a downlink control channel originating from the scheduling unit after the time period has lapsed, the downlink scheduling control message indicating a plurality of exclusively reserved fourth radio resources of the shared radio channel; and transmit fourth M2M data of the distributed machine control application via the at least one of the exclusively reserved fourth radio resources of the shared radio channel.

With the provided time period, the access scheme provides a way to release reserved resources temporarily when they are not used by the distributed machine control application. These resources may be re-allocated efficiently to other network participants after the lapse of the time period.

According to an advantageous example, the terminal unit is further configured to determine or receive a cease indication that the temporarily reduced second QoS requirement ceases to be valid; transmit the cease indication via the uplink control channel towards the scheduling unit; receive a downlink scheduling control message via a downlink control channel originating from the scheduling unit in response to the transmitted cease indication, the downlink scheduling control message indicating at least one of exclusively reserved third radio resources of the shared radio channel; and transmit third M2M data of the distributed machine control application via the at least one of exclusively reserved third radio resources of the shared radio channel.

The cease indication provides a radio access method, where the terminal unit will get back its scheduled resources according to the first QoS requirement. Advantageously, this guarantees that the distributed machine control application is not affected by an increased congestion level on the air interface.

A second aspect of the description is directed to a processing machine comprising the terminal unit according to the first aspect, wherein the processing machine comprises an actuator-sensor-system which is controlled by a controller, wherein the controller is configured to determine and provide the present operational status to the terminal unit.

A third aspect of the description is directed to a method to operate a terminal unit of a cellular radio network for wireless M2M communication, the method comprising: determine or receive a first QoS requirement for a distributed machine control application, wherein the first QoS requirement depends on a present operational status of the distributed machine control application; transmit the first QoS requirement via an uplink control channel towards a scheduling unit; receive a downlink scheduling control message via a downlink control channel originating from the scheduling unit in response to the transmitted first QoS requirement, the downlink scheduling control message indicating a plurality of exclusively reserved first radio resources of a shared radio channel; and transmit first M2M data of the distributed machine control application via the at least one of the exclusively reserved first radio resources of the shared radio channel.

A fourth aspect of the description is directed to a scheduling unit of a cellular radio network for wireless M2M communication, wherein the scheduling unit comprises at least one processing circuitry, at least one communication circuitry and at least one antenna, the processing circuitry being configured together with the at least one communication circuitry and the at least one antenna to cause the scheduling unit to receive a first QoS requirement via an uplink control channel from a terminal unit; exclusively reserve a plurality of first radio resources in dependence on the received first QoS requirement; and transmit a downlink scheduling control message via a downlink control channel towards the terminal unit in response to the received first QoS requirement, the downlink scheduling control message indicating a plurality of the exclusively reserved first radio resources of a shared radio channel.

Regarding the advantages of the access scheme, reference is made to the previously mentioned aspects and the further examples.

According to an advantageous example, the scheduling unit is further configured to receive a temporarily reduced second QoS requirement via the uplink control channel from the terminal unit; exclusively reserve a plurality of second radio resources in dependence on the received first QoS requirement; transmit a downlink scheduling control message via a downlink control channel towards the terminal unit in response to the received second QoS requirement, the downlink scheduling control message indicating the plurality of the exclusively reserved second radio resources of the shared radio channel.

According to an advantageous example, the scheduling unit is further configured to receive a time period via the uplink control channel from the terminal unit; determine an end of the received time period; exclusively reserve a plurality of fourth radio resources in dependence on the received first QoS requirement; and transmit a downlink scheduling control message via a downlink control channel towards the terminal unit after the time period has lapsed, the downlink scheduling control message indicating a plurality of exclusively reserved fourth radio resources of the shared radio channel.

According to an advantageous example, the scheduling unit is further configured to receive a cease indication via the uplink control channel from the terminal unit; exclusively reserve a plurality of third radio resources in dependence on the received first QoS requirement; and transmit a downlink scheduling control message via a downlink control channel towards the terminal unit in response to the transmitted cease indication, the downlink scheduling control message indicating a plurality of exclusively reserved third radio resources of the shared radio channel.

A further aspect of the description is directed to a method to operate a scheduling unit of a cellular radio network for wireless M2M communication, the method comprising: receive a first QoS requirement via an uplink control channel from a terminal unit; exclusively reserve a plurality of first radio resources in dependence on the received first QoS requirement; and transmit a downlink scheduling control message via a downlink control channel towards the terminal unit in response to the received first QoS requirement, the downlink scheduling control message indicating a plurality of the exclusively reserved first radio resources of a shared radio channel.
- Figure 1: depicts schematically a radio telecommunications network; and
- Figure 2: depicts schematically a sequence diagram.

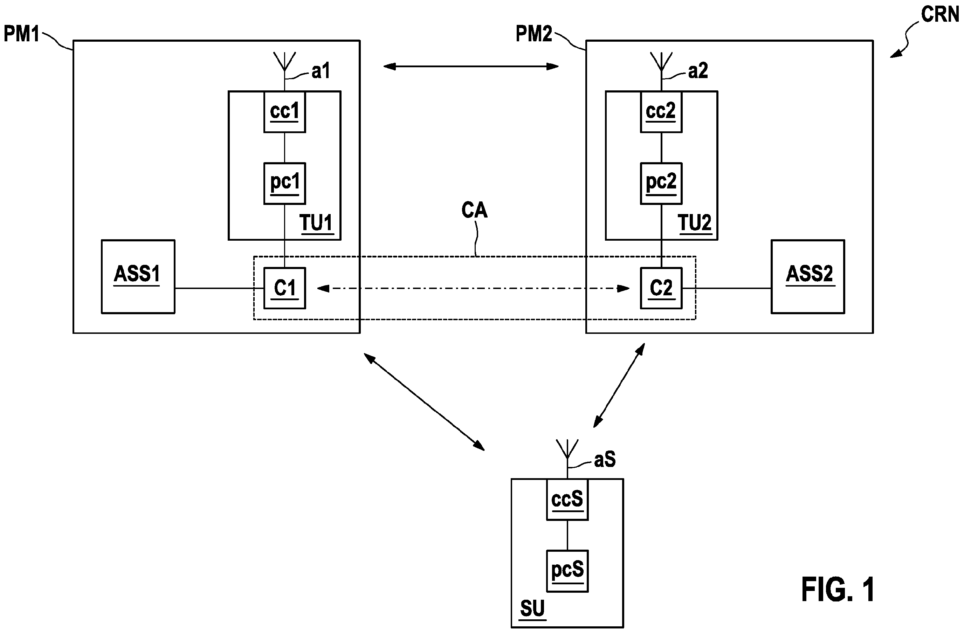

Figure 1 depicts schematically an exemplary radio telecommunications network RTN. The radio telecommunications network RTN is made up of two wireless terminal units TU1 and TU2, and one scheduling unit SU. The two wireless terminal units TU1 and TU2, and the scheduling unit SU of the radio telecommunications network RTN each comprises at least one processing circuitry pc1, pc2, pcS, at least one communication circuitry cc1, cc2, ccS and at least one antenna a1, a2, aS. The at least one processing circuitry pc1, pc2, pcS is configured to interact with the at least one communication circuitry cc1, cc2, ccS and the at least one antenna a1, a2, aS, so that the terminal unit TU1, TU2, or the scheduling unit SU conducts the method steps of this description. The two wireless terminal units TU1 and TU2, and the scheduling unit SU exchange data directly with each other via a shared radio channel. For example, the radio telecommunications network RTN is a cell-based network with a central radio managing entity in form of the scheduling unit SU providing a synchronization signal to the terminal units TU1 and TU2.

For example, a processing machine PM1, PM2 comprises the terminal unit TU1, TU2. The processing machine PM1, PM2 comprises an actuator-sensor-system ASS1, ASS2 which is controlled by a controller C1, C2. The controller C1, C2 is configured to determine and provide a present operational status of the actuator-sensor-system ASS1, ASS2 to the terminal unit TU1, TU2.

A distributed machine control application CA comprises the controllers C1, C2 which communicate with each other via the terminal units TU1 and TU2 and the air interface in form of the shared radio channel. For example, an actuator of the system ASS2 is controlled in dependence on a sensor value of a sensor of the system ASS1. The distributed machine control application CA generates cyclic traffic over the air interface and therefore has needed radio resources, that means time slots, bandwidth, priority, etc., assigned to guarantee the correct operation of its function. During operation of the distributed machine control application CA, the current operational requirements can be lower than the allocated radio resources. This is the case, e.g., in following situations: slow or less precise operation of the application, idle/waiting time of the application, position of a part of the application in a specific non-critical area with lower requirements on cycle times. So, the terminal units assigned to the distributed machine control application do not use one or several radio resources allocated.

The proposed radio access scheme targets factory automation applications, such as control of the machinery, mobile robotics or automated guided vehicles in the production and logistics. However, the proposed radio access scheme can also find application in other areas like wireless control-loops in building automation, or connected driving (Car2Car, or Car2X communication), in particular when the control of the car motion is at least partially located outside of the car.

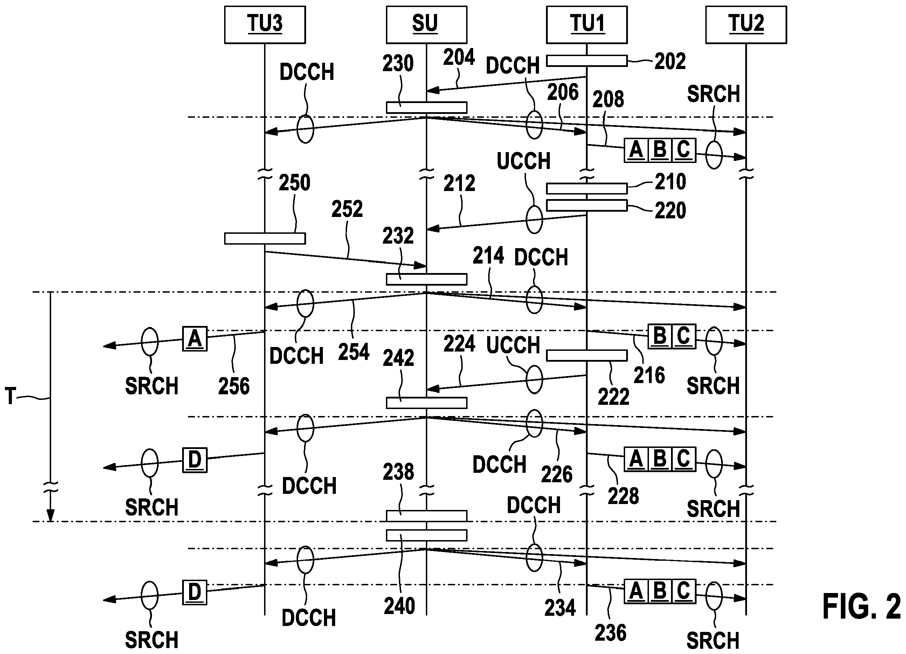

Figure 2 depicts schematically a sequence diagram. The terminal unit Till determines 202 or receives a first QoS requirement for a distributed machine control application CA, wherein the first QoS requirement depends on a present operational status of the distributed machine control application CA. The terminal unit TU1 transmits 204 the first QoS requirement via an uplink control channel UCCH towards the scheduling unit SU.

The scheduling unit SU exclusively reserves 230 a plurality of first radio resources A, B, C in dependence on the received first QoS requirement. The scheduling unit SU transmits 206 a downlink scheduling control message via a downlink control channel DCCH towards the terminal unit TU1 in response to the received first QoS requirement, the downlink scheduling control message indicating a plurality of the exclusively reserved first radio resources A, B, C of the shared radio channel SRCH.

The terminal unit TU1 receives 206 the downlink scheduling control message via the downlink control channel DCCH originating from the scheduling unit SU in response to the transmitted first QoS requirement. The terminal unit TU1 transmits 208 first M2M data of the distributed machine control application CA via the at least one of the exclusively reserved first radio resources A, B, C of the shared radio channel SRCH.

The terminal unit Till determines 210 or receives from the assigned controller a temporarily reduced second QoS requirement for the distributed machine control application CA. This second QoS requirement indicates a reduced activity of the distributed machine control application, for example because of an idle state of one of the actuator-sensor-systems assigned to the distributed machine control application. The terminal unit TU1 transmits 212 the temporarily reduced second QoS requirement via the uplink control channel UCCH towards the scheduling unit SU. The scheduling unit SU receives 212 the temporarily reduced second QoS requirement via the uplink control channel UCCH from the terminal unit TU1.

The scheduling unit SU exclusively reserves 232 a plurality of second radio resources B, C in dependence on the received second QoS requirement. The number of second resources B, C compared with the number of first resources A, B, C is reduced. Therefore, the resource A can be assigned to a further terminal unit TU3. The terminal unit TU3 determines 250 a resource requests and transmits 252 this request to the scheduling unit SU. The scheduling unit reserves 232 the resource A for the terminal unit TU3 and transmits 254 a downlink scheduling control message via the downlink control channel DCCH to the terminal unit TU3. The terminal unit TU3 transmits 256 data via the assigned radio resource A. Therefore, the freed non-utilized radio resource A becomes available for other network participants and is available in the pool of other network resources. Importantly, the scheduling unit SU is aware about temporal availability and usage priorities for such radio resources.

The scheduling unit SU transmits 214 the downlink scheduling control message via the downlink control channel DCCH towards the terminal unit TU1 in response to the received second QoS requirement, the downlink scheduling control message indicating the plurality of the exclusively reserved second radio resources B, C of the shared radio channel SRCH. The terminal unit TU 1 transmits 216 second M2M data of the distributed machine control application CA via the at least one of the exclusively reserved second radio resources A, B, C of the shared radio channel SRCH.

After reducing the QoS requirements for the distributed machine control application, the first terminal unit TU1 receives or determines an increased need for radio resources. This increased need is triggered by the operational state of the distributed machine control application. The terminal unit TU1 determines 222 or receives a cease indication that the temporarily reduced second QoS requirement ceases to be valid. The terminal unit TU1 transmits 224 the cease indication via the uplink control channel UCCH towards the scheduling unit SU.

The scheduling unit SU exclusively reserves 242 a plurality of third radio resources A, B, C in dependence on the received first QoS requirement. Another radio resource D is assigned to be used by the terminal unit TU3. The scheduling unit SU transmits 226 a downlink scheduling control message via the downlink control channel DCCH towards the terminal unit TU1 in response to the received cease indication, the downlink scheduling control message indicating a plurality of exclusively reserved third radio resources A, B, C of the shared radio channel SRCH. The terminal unit TU1 receives 226 the downlink scheduling control message via the downlink control channel DCCH originating from the scheduling unit SU in response to the transmitted cease indication. The terminal unit TU1 transmits 228 third M2M data of the distributed machine control application CA via at least one of exclusively reserved third radio resources A, B, C of the shared radio channel SRCH.

The terminal unit TU1 determines 220 a time period T the temporarily reduced second QoS requirement is valid. The terminal unit TU1 transmits 212 the time period T together with the first QoS requirement or separately via the uplink control channel UCCH towards the scheduling unit SU. The scheduling unit SU receives 212 the time period T via the uplink control channel UCCH from the terminal unit TU1. The scheduling unit SU determines 238 an end of the received time period T. The scheduling unit SU exclusively reserves 240 a plurality of fourth radio resources A, B, C in dependence on the received first QoS requirement. The terminal unit TU1 receives 234 the downlink scheduling control message via the downlink control channel DCCH originating from the scheduling unit SU after the time period T has lapsed. The terminal unit TU1 transmits 236 fourth M2M data of the distributed machine control application CA via at least one of the exclusively reserved fourth radio resources A, B, C of the shared radio channel SRCH.

In another example, the scheduling unit SU determines a further time period after receiving the second QoS requirement. After the lapse of the further time period, the scheduling unit SU returns to exclusively reserve radio resources for the distributed machine control application according to the first QoS requirement.

The QoS requirements in this description refers to a necessary Quality of Service to operate the distributed machine control application. Examples for a QoS requirement include a transmission capacity, a delay time, jitter, packet loss rate.

The exclusive reservation of radio resources for the distributed machine control application or the first terminal unit comprises a semi-persistent scheduling. That means that the corresponding scheduling grant in form of the downlink scheduling control message indicates a cycle time or radio resource pattern pointing to the semi-persistently reserved radio resources.

The radio resources A, B, C differ at least on one of the following: time, code, and frequency. The radio resources A, B, C have the same reference letter in the figures and the description in order to provide a better understanding of the access scheme. Of course, the particular radio resources in the different steps differ.

## Claims

1. A terminal unit (Till; TU2) of a cellular radio network (CRN) for wireless M2M communication, wherein the terminal unit (TU1) comprises at least one processing circuitry (pc1; pc2), at least one communication circuitry (cc1; cc2) and at least one antenna (a1; a2), the processing circuitry (pc1; pc2) being configured together with the at least one communication circuitry (cc1; cc2) and the at least one antenna (a1; a2) to cause the terminal unit (TU1; TU2) to
determine (202) or receive a first QoS requirement for a distributed machine control application (CA), wherein the first QoS requirement depends on a present operational status of the distributed machine control application (CA);
transmit (204) the first QoS requirement via an uplink control channel (UCCH) towards a scheduling unit (SU);
receive (206) a downlink scheduling control message via a downlink control channel (DCCH) originating from the scheduling unit (SU) in response to the transmitted first QoS requirement, the downlink scheduling control message indicating a plurality of exclusively reserved first radio resources (A, B, C) of a shared radio channel (SRCH);
transmit (208) first M2M data of the distributed machine control application (CA) via at least one of the exclusively reserved first radio resources (A, B, C) of the shared radio channel (SRCH);
determine (210) or receive a temporarily reduced second QoS requirement for the distributed machine control application (CA);
transmit (212) the temporarily reduced second QoS requirement via the uplink control channel (UCCH) towards the scheduling unit (SU);
receive (214) a downlink scheduling control message via a downlink control channel (DCCH) originating from the scheduling unit (SU) in response to the transmitted second QoS requirement, the downlink scheduling control message indicating a plurality of exclusively reserved second radio resources (B, C) of the shared radio channel (SRCH);
transmit (216) second M2M data of the distributed machine control application (CA) via at least one of the exclusively reserved second radio resources (A, B, C) of the shared radio channel (SRCH);
determine (220) a time period (T) the temporarily reduced second QoS requirement is valid;
transmit (212) the time period (T) via the uplink control channel (UCCH) towards the scheduling unit (SU);
receive (234) a downlink scheduling control message via a downlink control channel (DCCH) originating from the scheduling unit (SU) after the time period (T) has lapsed, the downlink scheduling control message indicating a plurality of exclusively reserved fourth radio resources (A, B, C) of the shared radio channel (SRCH); and
transmit (236) fourth M2M data of the distributed machine control application (CA) via at least one of the exclusively reserved fourth radio resources (A, B, C) of the shared radio channel (SRCH).

2. The terminal unit (TU1; TU2) according to claim 1, wherein the terminal unit (TU1; TU2) is further configured to
determine (222) or receive a cease indication that the temporarily reduced second QoS requirement ceases to be valid;
transmit (224) the cease indication via the uplink control channel (UCCH) towards the scheduling unit (SU);
receive (226) a downlink scheduling control message via a downlink control channel (DCCH) originating from the scheduling unit (SU) in response to the transmitted cease indication, the downlink scheduling control message indicating at least one of exclusively reserved third radio resources (A, B, C) of the shared radio channel (SRCH); and
transmit (228) third M2M data of the distributed machine control application (CA) via at least one of exclusively reserved third radio resources (A, B, C) of the shared radio channel (SRCH).

3. A processing machine (PM1; PM2) comprising the terminal unit (TU1; TU2) according to one of the preceding claims, wherein the processing machine (PM1; PM2) comprises an actuator-sensor-system (ASS1; ASS2) which is controlled by a controller (C1; C2), wherein the controller (C1; C2) is configured to determine and provide the present operational status to the terminal unit (TU1; TU2).

4. A method to operate a terminal unit (TU1; TU2) of a cellular radio network (CRN) for wireless M2M communication, the method comprising:
determine (202) or receive a first QoS requirement for a distributed machine control application (CA), wherein the first QoS requirement depends on a present operational status of the distributed machine control application (CA);
transmit (204) the first QoS requirement via an uplink control channel (UCCH) towards a scheduling unit (SU);
receive (206) a downlink scheduling control message via a downlink control channel (DCCH) originating from the scheduling unit (SU) in response to the transmitted first QoS requirement, the downlink scheduling control message indicating a plurality of exclusively reserved first radio resources (A, B, C) of a shared radio channel (SRCH); and
transmit (208) first M2M data of the distributed machine control application (CA) via at least one of the exclusively reserved first radio resources (A, B, C) of the shared radio channel (SRCH);
determine (210) or receive a temporarily reduced second QoS requirement for the distributed machine control application (CA);
transmit (212) the temporarily reduced second QoS requirement via the uplink control channel (UCCH) towards the scheduling unit (SU);
receive (214) a downlink scheduling control message via a downlink control channel (DCCH) originating from the scheduling unit (SU) in response to the transmitted second QoS requirement, the downlink scheduling control message indicating a plurality of exclusively reserved second radio resources (B, C) of the shared radio channel (SRCH);
transmit (216) second M2M data of the distributed machine control application (CA) via at least one of the exclusively reserved second radio resources (A, B, C) of the shared radio channel (SRCH);
determine (220) a time period (T) the temporarily reduced second QoS requirement is valid;
transmit (212) the time period (T) via the uplink control channel (UCCH) towards the scheduling unit (SU);
receive (234) a downlink scheduling control message via a downlink control channel (DCCH) originating from the scheduling unit (SU) after the time period (T) has lapsed, the downlink scheduling control message indicating a plurality of exclusively reserved fourth radio resources (A, B, C) of the shared radio channel (SRCH); and
transmit (236) fourth M2M data of the distributed machine control application (CA) via at least one of the exclusively reserved fourth radio resources (A, B, C) of the shared radio channel (SRCH).

5. A scheduling unit (SU) of a cellular radio network (CRN) for wireless M2M communication, wherein the scheduling unit (SU) comprises at least one processing circuitry (pcS), at least one communication circuitry (ccS) and at least one antenna (aS), the processing circuitry (pcS) being configured together with the at least one communication circuitry (ccS) and the at least one antenna (aS) to cause the scheduling unit (SU) to
receive (204) a first QoS requirement via an uplink control channel (UCCH) from a terminal unit (TU1; TU2);
exclusively reserve (230) a plurality of first radio resources (A, B, C) in dependence on the received first QoS requirement;
transmit a downlink scheduling control message via a downlink control channel (DCCH) towards the terminal unit (TU1; TU2) in response to the received first QoS requirement, the downlink scheduling control message indicating a plurality of the exclusively reserved first radio resources (A, B, C) of a shared radio channel (SRCH);
receive (212) a temporarily reduced second QoS requirement via the uplink control channel (UCCH) from the terminal unit (TU1);
exclusively reserve (232) a plurality of second radio resources (B, C) in dependence on the received second QoS requirement;
transmit (214) a downlink scheduling control message via a downlink control channel (DCCH) towards the terminal unit (TU1) in response to the received second QoS requirement, the downlink scheduling control message indicating the plurality of the exclusively reserved second radio resources (B, C) of the shared radio channel (SRCH);
receive (212) a time period (T) via the uplink control channel (UCCH) from the terminal unit (TU1);
determine (238) an end of the received time period (T);
exclusively reserve (240) a plurality of fourth radio resources (A, B, C) in dependence on the received first QoS requirement; and
transmit (234) a downlink scheduling control message via a downlink control channel (DCCH) towards the terminal unit (TU1; TU2) after the time period (T) has lapsed, the downlink scheduling control message indicating a plurality of exclusively reserved fourth radio resources (A, B, C) of the shared radio channel (SRCH).

6. The scheduling unit (SU) according to claim 5, wherein the scheduling unit (SU) is further configured to
receive (224) a cease indication via the uplink control channel (UCCH) from the terminal unit (TU1; TU2);
exclusively reserve (242) a plurality of third radio resources (A, B, C) in dependence on the received first QoS requirement; and
transmit (226) a downlink scheduling control message via a downlink control channel (DCCH) towards the terminal unit (TU1; TU2) in response to the transmitted cease indication, the downlink scheduling control message indicating a plurality of exclusively reserved third radio resources (A, B, C) of the shared radio channel (SRCH).

7. A method to operate a scheduling unit (SU) of a cellular radio network (CRN) for wireless M2M communication, the method comprising:
receive (204) a first QoS requirement via an uplink control channel (UCCH) from a terminal unit (TU1; TU2);
exclusively reserve (230) a plurality of first radio resources (A, B, C) in dependence on the received first QoS requirement; and
transmit (206) a downlink scheduling control message via a downlink control channel (DCCH) towards the terminal unit (TU1; TU2) in response to the received first QoS requirement, the downlink scheduling control message indicating a plurality of the exclusively reserved first radio resources (A, B, C) of a shared radio channel (SRCH);
receive (212) a temporarily reduced second QoS requirement via the uplink control channel (UCCH) from the terminal unit (TU1);
exclusively reserve (232) a plurality of second radio resources (B, C) in dependence on the received second QoS requirement;
transmit (214) a downlink scheduling control message via a downlink control channel (DCCH) towards the terminal unit (TU1) in response to the received second QoS requirement, the downlink scheduling control message indicating the plurality of the exclusively reserved second radio resources (B, C) of the shared radio channel (SRCH);
receive (212) a time period (T) via the uplink control channel (UCCH) from the terminal unit (TU1);
determine (238) an end of the received time period (T);
exclusively reserve (240) a plurality of fourth radio resources (A, B, C) in dependence on the received first QoS requirement; and
transmit (234) a downlink scheduling control message via a downlink control channel (DCCH) towards the terminal unit (TU1; TU2) after the time period (T) has lapsed, the downlink scheduling control message indicating a plurality of exclusively reserved fourth radio resources (A, B, C) of the shared radio channel (SRCH).

## Patentansprüche

1. Endgeräteinheit (TU1, TU2) eines Mobilfunknetzes (CRN) für drahtlose M2M-Kommunikation, wobei die Endgeräteinheit (TU1) mindestens eine Verarbeitungsschaltung (pc1, pc2), mindestens eine Kommunikationsschaltung (cd, cc2) und mindestens eine Antenne (a1, a2) umfasst, wobei die Verarbeitungsschaltung (pc1, pc2) zusammen mit der mindestens einen Kommunikationsschaltung (cc1, cc2) und der mindestens einen Antenne (a1, a2) konfiguriert ist, um die Endgeräteinheit (TU1, TU2) zu Folgendem zu veranlassen:
Bestimmen (202) oder Empfangen einer ersten QoS-Anforderung für eine dezentrale Maschinensteueranwendung (CA), wobei die erste QoS-Anforderung von einem gegenwärtigen Betriebszustand der dezentralen Maschinensteueranwendung (CA) abhängt,
Übertragen (204) der ersten QoS-Anforderung über einen Uplink-Steuerkanal (UCCH) an eine Zeitplanungseinheit (SU),
Empfangen (206) einer Downlink-Zeitplanungssteuernachricht über einen Downlink-Steuerkanal (DCCH), die von der Zeitplanungseinheit (SU) stammt, in Reaktion auf die übertragene erste QoS-Anforderung, wobei die Downlink-Zeitplanungssteuernachricht eine Mehrzahl exklusiv reservierter erster Funkressourcen (A, B, C) eines gemeinsam genutzten Funkkanals (SRCH) angibt,
Übertragen (208) erster M2M-Daten der dezentralen Maschinensteueranwendung (CA) über mindestens eine der exklusiv reservierten ersten Funkressourcen (A, B, C) des gemeinsam genutzten Funkkanals (SRCH),
Bestimmen (210) oder Empfangen einer temporär reduzierten zweiten QoS-Anforderung für die dezentrale Maschinensteueranwendung (CA),
Übertragen (212) der temporär reduzierten zweiten QoS-Anforderung über den Uplink-Steuerkanal (UCCH) an die Zeitplanungseinheit (SU),
Empfangen (214) einer Downlink-Zeitplanungssteuernachricht über einen Downlink-Steuerkanal (DCCH), die von der Zeitplanungseinheit (SU) stammt, in Reaktion auf die übertragene zweite QoS-Anforderung, wobei die Downlink-Zeitplanungssteuernachricht eine Mehrzahl exklusiv reservierter zweiter Funkressourcen (B, C) des gemeinsam genutzten Funkkanals (SRCH) angibt,
Übertragen (216) zweiter M2M-Daten der dezentralen Maschinensteueranwendung (CA) über mindestens eine der exklusiv reservierten zweiten Funkressourcen (A, B, C) des gemeinsam genutzten Funkkanals (SRCH),
Bestimmen (220) einer Zeitspanne (T), in der die temporär reduzierte zweite QoS-Anforderung gültig ist,
Übertragen (212) der Zeitspanne (T) über den Uplink-Steuerkanal (UCCH) an die Zeitplanungseinheit (SU),
Empfangen (234) einer Downlink-Zeitplanungssteuernachricht über einen Downlink-Steuerkanal (DCCH), die von der Zeitplanungseinheit (SU) stammt, nachdem die Zeitspanne (T) verstrichen ist, wobei die Downlink-Zeitplanungssteuernachricht eine Mehrzahl exklusiv reservierter vierter Funkressourcen (A, B, C) des gemeinsam genutzten Funkkanals (SRCH) angibt, und
Übertragen (236) vierter M2M-Daten der dezentralen Maschinensteueranwendung (CA) über mindestens eine der exklusiv reservierten vierten Funkressourcen (A, B, C) des gemeinsam genutzten Funkkanals (SRCH).

2. Endgeräteinheit (TU1, TU2) nach Anspruch 1, wobei die Endgeräteinheit (TU1, TU2) ferner für Folgendes konfiguriert ist:
Bestimmen (222) oder Empfangen einer Beendigungsangabe, dass die Gültigkeit der temporär reduzierten zweiten QoS-Anforderung endet,
Übertragen (224) der Beendigungsangabe über den Uplink-Steuerkanal (UCCH) an die Zeitplanungseinheit (SU),
Empfangen (226) einer Downlink-Zeitplanungssteuernachricht über einen Downlink-Steuerkanal (DCCH), die von der Zeitplanungseinheit (SU) stammt, in Reaktion auf die übertragene Beendigungsangabe, wobei die Downlink-Zeitplanungssteuernachricht mindestens eine von exklusiv reservierten dritten Funkressourcen (A, B, C) des gemeinsam genutzten Funkkanals (SRCH) angibt,
Übertragen (228) dritter M2M-Daten der dezentralen Maschinensteueranwendung (CA) über mindestens eine der exklusiv reservierten dritten Funkressourcen (A, B, C) des gemeinsam genutzten Funkkanals (SRCH).

3. Verarbeitungsmaschine (PM1, PM2), die Endgeräteinheit (TU1, TU2) nach einem der vorhergehenden Ansprüche umfassend, wobei die Verarbeitungsmaschine (PM1, PM2) ein Aktor-Sensor-System (ASS1, ASS2) umfasst, das von einer Steuerung (C1, C2) gesteuert wird, wobei die Steuerung (C1, C2) dafür konfiguriert ist, den gegenwärtigen Betriebszustand der Endgeräteinheit (TU1, TU2) zu bestimmen und bereitzustellen.

4. Verfahren zum Betreiben einer Endgeräteinheit (TU1, TU2) eines Mobilfunknetzes (CRN) für drahtlose M2M-Kommunikation, wobei das Verfahren Folgendes umfasst:
Bestimmen (202) oder Empfangen einer ersten QoS-Anforderung für eine dezentrale Maschinensteueranwendung (CA), wobei die erste QoS-Anforderung von einem gegenwärtigen Betriebszustand der dezentralen Maschinensteueranwendung (CA) abhängt,
Übertragen (204) der ersten QoS-Anforderung über einen Uplink-Steuerkanal (UCCH) an eine Zeitplanungseinheit (SU),
Empfangen (206) einer Downlink-Zeitplanungssteuernachricht über einen Downlink-Steuerkanal (DCCH), die von der Zeitplanungseinheit (SU) stammt, in Reaktion auf die übertragene erste QoS-Anforderung, wobei die Downlink-Zeitplanungssteuernachricht eine Mehrzahl exklusiv reservierter erster Funkressourcen (A, B, C) eines gemeinsam genutzten Funkkanals (SRCH) angibt, und
Übertragen (208) erster M2M-Daten der dezentralen Maschinensteueranwendung (CA) über mindestens eine der exklusiv reservierten ersten Funkressourcen (A, B, C) des gemeinsam genutzten Funkkanals (SRCH),
Bestimmen (210) oder Empfangen einer temporär reduzierten zweiten QoS-Anforderung für die dezentrale Maschinensteueranwendung (CA),
Übertragen (212) der temporär reduzierten zweiten QoS-Anforderung über den Uplink-Steuerkanal (UCCH) an die Zeitplanungseinheit (SU),
Empfangen (214) einer Downlink-Zeitplanungssteuernachricht über einen Downlink-Steuerkanal (DCCH), die von der Zeitplanungseinheit (SU) stammt, in Reaktion auf die übertragene zweite QoS-Anforderung, wobei die Downlink-Zeitplanungssteuernachricht eine Mehrzahl exklusiv reservierter zweiter Funkressourcen (B, C) des gemeinsam genutzten Funkkanals (SRCH) angibt,
Übertragen (216) zweiter M2M-Daten der dezentralen Maschinensteueranwendung (CA) über mindestens eine der exklusiv reservierten zweiten Funkressourcen (A, B, C) des gemeinsam genutzten Funkkanals (SRCH),
Bestimmen (220) einer Zeitspanne (T), in der die temporär reduzierte zweite QoS-Anforderung gültig ist,
Übertragen (212) der Zeitspanne (T) über den Uplink-Steuerkanal (UCCH) an die Zeitplanungseinheit (SU),
Empfangen (234) einer Downlink-Zeitplanungssteuernachricht über einen Downlink-Steuerkanal (DCCH), die von der Zeitplanungseinheit (SU) stammt, nachdem die Zeitspanne (T) verstrichen ist, wobei die Downlink-Zeitplanungssteuernachricht eine Mehrzahl exklusiv reservierter vierter Funkressourcen (A, B, C) des gemeinsam genutzten Funkkanals (SRCH) angibt, und
Übertragen (236) vierter M2M-Daten der dezentralen Maschinensteueranwendung (CA) über mindestens eine der exklusiv reservierten vierten Funkressourcen (A, B, C) des gemeinsam genutzten Funkkanals (SRCH).

5. Zeitplanungseinheit (SU) eines Mobilfunknetzes (CRN) für drahtlose M2M-Kommunikation, wobei die Zeitplanungseinheit (SU) mindestens eine Verarbeitungsschaltung (pcS), mindestens eine Kommunikationsschaltung (ccS) und mindestens eine Antenne (aS) umfasst, wobei die Verarbeitungsschaltung (pcS) zusammen mit der mindestens einen Kommunikationsschaltung (ccS) und der mindestens einen Antenne (aS) konfiguriert ist, um die Zeitplanungseinheit (SU) zu Folgendem zu veranlassen:
Empfangen (204) einer ersten QoS-Anforderung über einen Uplink-Steuerkanal (UCCH) von einer Endgeräteinheit (TU1, TU2),
exklusives Reservieren (230) einer Mehrzahl erster Funkressourcen (A, B, C) in Abhängigkeit von der empfangenen ersten QoS-Anforderung,
Übertragen einer Downlink-Zeitplanungssteuernachricht über einen Downlink-Steuerkanal (DCCH) an die Endgeräteinheit (TU1, TU2) in Reaktion auf die empfangene erste QoS-Anforderung, wobei die Downlink-Zeitplanungssteuernachricht eine Mehrzahl der exklusiv reservierten ersten Funkressourcen (A, B, C) eines gemeinsam genutzten Funkkanals (SRCH) angibt,
Empfangen (212) einer temporär reduzierten zweiten QoS-Anforderung über den Uplink-Steuerkanal (UCCH) von der Endgeräteinheit (TU1),
exklusives Reservieren (232) einer Mehrzahl zweiter Funkressourcen (B, C) in Abhängigkeit von der empfangenen zweiten QoS-Anforderung,
Übertragen (214) einer Downlink-Zeitplanungssteuernachricht über einen Downlink-Steuerkanal (DCCH) an die Endgeräteinheit (TU1) in Reaktion auf die empfangene zweite QoS-Anforderung, wobei die Downlink-Zeitplanungssteuernachricht die Mehrzahl der exklusiv reservierten zweiten Funkressourcen (B, C) des gemeinsam genutzten Funkkanals (SRCH) angibt,
Empfangen (212) einer Zeitspanne (T) über den Uplink-Steuerkanal (UCCH) von der Endgeräteinheit (TU1),
Bestimmen (238) eines Endes der empfangenen Zeitspanne (T),
exklusives Reservieren (240) einer Mehrzahl vierter Funkressourcen (A, B, C) in Abhängigkeit von der empfangenen ersten QoS-Anforderung, und
Übertragen (234) einer Downlink-Zeitplanungssteuernachricht über einen Downlink-Steuerkanal (DCCH) an die Endgeräteinheit (TU1, TU2), nachdem die Zeitspanne (T) verstrichen ist, wobei die Downlink-Zeitplanungssteuernachricht eine Mehrzahl exklusiv reservierter vierter Funkressourcen (A, B, C) des gemeinsam genutzten Funkkanals (SRCH) angibt.

6. Zeitplanungseinheit (SU) nach Anspruch 5, wobei die Zeitplanungseinheit (SU) ferner für Folgendes konfiguriert ist:
Empfangen (224) einer Beendigungsangabe über den Uplink-Steuerkanal (UCCH) von der Endgeräteinheit (TU1, TU2),
exklusives Reservieren (242) einer Mehrzahl dritter Funkressourcen (A, B, C) in Abhängigkeit von der empfangenen ersten QoS-Anforderung, und
Übertragen (226) einer Downlink-Zeitplanungssteuernachricht über einen Downlink-Steuerkanal (DCCH) an die Endgeräteinheit (TU1, TU2) in Reaktion auf die übertragene Beendigungsangabe, wobei die Downlink-Zeitplanungssteuernachricht eine Mehrzahl von exklusiv reservierten dritten Funkressourcen (A, B, C) eines gemeinsam genutzten Funkkanals (SRCH) angibt.

7. Verfahren zum Betreiben einer Zeitplanungseinheit (SU) eines Mobilfunknetzes (CRN) für drahtlose M2M-Kommunikation, wobei das Verfahren ferner Folgendes umfasst:
Empfangen (204) einer ersten QoS-Anforderung über einen Uplink-Steuerkanal (UCCH) von einer Endgeräteinheit (TU1, TU2),
exklusives Reservieren (230) einer Mehrzahl erster Funkressourcen (A, B, C) in Abhängigkeit von der empfangenen ersten QoS-Anforderung, und
Übertragen (206) einer Downlink-Zeitplanungssteuernachricht über einen Downlink-Steuerkanal (DCCH) an die Endgeräteinheit (TU1, TU2) in Reaktion auf die empfangene erste QoS-Anforderung, wobei die Downlink-Zeitplanungssteuernachricht eine Mehrzahl der exklusiv reservierten ersten Funkressourcen (A, B, C) eines gemeinsam genutzten Funkkanals (SRCH) angibt,
Empfangen (212) einer temporär reduzierten zweiten QoS-Anforderung über den Uplink-Steuerkanal (UCCH) von der Endgeräteinheit (TU1),
exklusives Reservieren (232) einer Mehrzahl zweiter Funkressourcen (B, C) in Abhängigkeit von der empfangenen zweiten QoS-Anforderung,
Übertragen (214) einer Downlink-Zeitplanungssteuernachricht über einen Downlink-Steuerkanal (DCCH) an die Endgeräteinheit (TU1) in Reaktion auf die empfangene zweite QoS-Anforderung, wobei die Downlink-Zeitplanungssteuernachricht die Mehrzahl der exklusiv reservierten zweiten Funkressourcen (B, C) des gemeinsam genutzten Funkkanals (SRCH) angibt,
Empfangen (212) einer Zeitspanne (T) über den Uplink-Steuerkanal (UCCH) von dem Endgeräteinheit (TU1),
Bestimmen (238) eines Endes der empfangenen Zeitspanne (T),
exklusives Reservieren (240) einer Mehrzahl vierter Funkressourcen (A, B, C) in Abhängigkeit von der empfangenen ersten QoS-Anforderung, und
Übertragen (234) einer Downlink-Zeitplanungssteuernachricht über einen Downlink-Steuerkanal (DCCH) an die Endgeräteinheit (TU1, TU2), nachdem die Zeitspanne (T) verstrichen ist, wobei die Downlink-Zeitplanungssteuernachricht eine Mehrzahl exklusiv reservierter vierter Funkressourcen (A, B, C) des gemeinsam genutzten Funkkanals (SRCH) angibt.

## Revendications

1. Unité de terminal (TU1 ; TU2) d'un réseau radio cellulaire (CRN) pour une communication M2M sans fil, dans laquelle l'unité de terminal (TU1) comprend au moins un circuit de traitement (pc1 ; pc2), au moins un circuit de communication (cc1 ; cc2) et au moins une antenne (a1 ; a2), le circuit de traitement (pc1 ; pc2) étant configuré conjointement avec l'au moins un circuit de communication (cc1 ; cc2) et l'au moins une antenne (a1 ; a2) pour amener l'unité de terminal (TU1 ; TU2) à
déterminer (202) ou recevoir une première exigence de QoS pour une application de commande de machine distribuée (CA), dans laquelle la première exigence de QoS dépend d'un état opérationnel en cours de l'application de commande de machine distribuée (CA) ;
transmettre (204) la première exigence de QoS par le biais d'un canal de commande de liaison montante (UCCH) à une unité de programmation (SU) ;
recevoir (206) un message de commande de programmation de liaison descendante par le biais d'un canal de commande de liaison descendante (DCCH) en provenance de l'unité de programmation (SU) en réponse à la première exigence de QoS transmise, le message de commande de programmation de liaison descendante indiquant une pluralité de premières ressources radio à usage exclusif (A, B, C) d'un canal radio partagé (SRCH) ;
transmettre (208) des premières données M2M de l'application de commande de machine distribuée (CA) par le biais d'au moins l'une des premières ressources radio à usage exclusif (A, B, C) du canal radio partagé (SRCH) ;
déterminer (210) ou recevoir une seconde exigence de QoS temporairement réduite pour l'application de commande de machine distribuée (CA) ;
transmettre (212) la seconde exigence de QoS temporairement réduite par le biais du canal de commande de liaison montante (UCCH) à l'unité de programmation (SU) ;
recevoir (214) un message de commande de programmation de liaison descendante par le biais d'un canal de commande de liaison descendante (DCCH) en provenance de l'unité de programmation (SU) en réponse à la seconde exigence de QoS transmise, le message de commande de programmation de liaison descendante indiquant une pluralité de deuxièmes ressources radio à usage exclusif (B, C) du canal radio partagé (SRCH) ;
transmettre (216) des deuxièmes données M2M de l'application de commande de machine distribuée (CA) par le biais d'au moins l'une des deuxièmes ressources radio à usage exclusif (A, B, C) du canal radio partagé (SRCH) ;
déterminer (220) une période temporelle (T) pendant laquelle la seconde exigence de QoS temporairement réduite est valide ;
transmettre (212) la période temporelle (T) par le biais du canal de commande de liaison montante (UCCH) à l'unité de programmation (SU) ;
recevoir (234) un message de commande de programmation de liaison descendante par le biais d'un canal de commande de liaison descendante (DCCH) en provenance de l'unité de programmation (SU) après l'écoulement de la période temporelle (T), le message de commande de programmation de liaison descendante indiquant une pluralité de quatrièmes ressources radio à usage exclusif (A, B, C) du canal radio partagé (SRCH) ; et
transmettre (236) des quatrièmes données M2M de l'application de commande de machine distribuée (CA) par le biais d'au moins l'une des quatrièmes ressources radio à usage exclusif (A, B, C) du canal radio partagé (SRCH).

2. Unité de terminal (TU1 ; TU2) selon la revendication 1, dans laquelle l'unité de terminal (TU1 ; TU2) est en outre configurée pour
déterminer (222) ou recevoir une indication de fin indiquant que la seconde exigence de QoS temporairement réduite cesse d'être valide ;
transmettre (224) l'indication de fin par le biais du canal de commande de liaison montante (UCCH) à l'unité de programmation (SU) ;
recevoir (226) un message de commande de programmation de liaison descendante par le biais d'un canal de commande de liaison descendante (DCCH) en provenance de l'unité de programmation (SU) en réponse à l'indication de fin transmise, le message de commande de programmation de liaison descendante indiquant au moins l'une de troisièmes ressources radio à usage exclusif (A, B, C) du canal radio partagé (SRCH) ; et
la transmission (228) de troisièmes données M2M de l'application de commande de machine distribuée (CA) par le biais d'au moins l'une des troisièmes ressources radio à usage exclusif (A, B, C) du canal radio partagé (SRCH).

3. Machine de traitement (PM1 ; PM2) comprenant l'unité de terminal (TU1 ; TU2) selon l'une quelconque des revendications précédentes, dans laquelle la machine de traitement (PM1 ; PM2) comprend un système actionneur-capteur (ASS1 ; ASS2) qui est commandé par un dispositif de commande (C1 ; C2), dans laquelle le dispositif de commande (C1; C2) est configuré pour déterminer et fournir l'état opérationnel en cours à l'unité de terminal (TU1 ; TU2).

4. Procédé de fonctionnement d'une unité de terminal (TU1 ; TU2) d'un réseau radio cellulaire (CRN) pour une communication M2M sans fil, le procédé comprenant :
la détermination (202) ou la réception d'une première exigence de QoS pour une application de commande de machine distribuée (CA), dans lequel la première exigence de QoS dépend d'un état opérationnel en cours de l'application de commande de machine distribuée (CA) ;
la transmission (204) de la première exigence de QoS par le biais d'un canal de commande de liaison montante (UCCH) à une unité de programmation (SU) ;
la réception (206) d'un message de commande de programmation de liaison descendante par le biais d'un canal de commande de liaison descendante (DCCH) en provenance de l'unité de programmation (SU) en réponse à la première exigence de QoS transmise, le message de commande de programmation de liaison descendante indiquant une pluralité de premières ressources radio à usage exclusif (A, B, C) d'un canal radio partagé (SRCH) ; et
la transmission (208) de premières données M2M de l'application de commande de machine distribuée (CA) par le biais d'au moins l'une des premières ressources radio à usage exclusif (A, B, C) du canal radio partagé (SRCH) ;
la détermination (210) ou la réception d'une seconde exigence de QoS temporairement réduite pour l'application de commande de machine distribuée (CA) ;
la transmission (212) de la seconde exigence de QoS temporairement réduite par le biais du canal de commande de liaison montante (UCCH) à l'unité de programmation (SU) ;
la réception (214) d'un message de commande de programmation de liaison descendante par le biais d'un canal de commande de liaison descendante (DCCH) en provenance de l'unité de programmation (SU) en réponse à la seconde exigence de QoS transmise, le message de commande de programmation de liaison descendante indiquant une pluralité de deuxièmes ressources radio à usage exclusif (B, C) du canal radio partagé (SRCH) ;
la transmission (216) de deuxièmes données M2M de l'application de commande de machine distribuée (CA) par le biais d'au moins l'une des deuxièmes ressources radio à usage exclusif (A, B, C) du canal radio partagé (SRCH) ;
la détermination (220) d'une période temporelle (T) pendant laquelle la seconde exigence de QoS temporairement réduite est valide ;
la transmission (212) de la période temporelle (T) par le biais du canal de commande de liaison montante (UCCH) à l'unité de programmation (SU) ;
la réception (234) d'un message de commande de programmation de liaison descendante par le biais d'un canal de commande de liaison descendante (DCCH) en provenance de l'unité de programmation (SU) après l'écoulement de la période temporelle (T), le message de commande de programmation de liaison descendante indiquant une pluralité de quatrièmes ressources radio à usage exclusif (A, B, C) du canal radio partagé (SRCH) ; et
la transmission (236) de quatrièmes données M2M de l'application de commande de machine distribuée (CA) par le biais d'au moins l'une des quatrièmes ressources radio à usage exclusif (A, B, C) du canal radio partagé (SRCH).

5. Unité de programmation (SU) d'un réseau radio cellulaire (CRN) pour une communication M2M sans fil, dans laquelle l'unité de programmation (SU) comprend au moins un circuit de traitement (pcS), au moins un circuit de communication (ccS) et au moins une antenne (aS), le circuit de traitement (pcS) étant configuré conjointement avec l'au moins un circuit de communication (ccS) et l'au moins une antenne (aS) pour amener l'unité de programmation (SU) à
recevoir (204) une première exigence de QoS par le biais d'un canal de commande de liaison montante (UCCH) depuis une unité de terminal (TU1 ; TU2) ;
réserver exclusivement (230) une pluralité de premières ressources radio (A, B, C) en fonction de la première exigence de QoS reçue ;
transmettre un message de commande de programmation de liaison descendante par le biais d'un canal de commande de liaison descendante (DCCH) à l'unité de terminal (TU1 ; TU2) en réponse à la première exigence de QoS reçue, le message de commande de programmation de liaison descendante indiquant une pluralité de premières ressources radio à usage exclusif (A, B, C) d'un canal radio partagé (SRCH) ;
recevoir (212) une seconde exigence de QoS temporairement réduite par le biais du canal de commande de liaison montante (UCCH) depuis l'unité de terminal (TU1) ;
réserver exclusivement (232) une pluralité de deuxièmes ressources radio (B, C) en fonction de la seconde exigence de QoS reçue ;
transmettre (214) un message de commande de programmation de liaison descendante par le biais d'un canal de commande de liaison descendante (DCCH) à l'unité de terminal (TU1), en réponse à la seconde exigence de QoS reçue, le message de commande de programmation de liaison descendante indiquant la pluralité de deuxièmes ressources radio à usage exclusif (B, C) du canal radio partagé (SRCH) ;
recevoir (212) une période temporelle (T) par le biais du canal de commande de liaison montante (UCCH) depuis l'unité de terminal (TU1) ;
déterminer (238) une fin de la période temporelle (T) reçue ;
réserver exclusivement (240) une pluralité de quatrièmes ressources radio (A, B, C) en fonction de la première exigence de QoS reçue ; et
transmettre (234) un message de commande de programmation de liaison descendante par le biais d'un canal de commande de liaison descendante (DCCH) à l'unité de terminal (TU1 ; TU2) après l'écoulement de la période temporelle (T), le message de commande de programmation de liaison descendante indiquant une pluralité de quatrièmes ressources radio à usage exclusif (A, B, C) du canal radio partagé (SRCH).

6. Unité de programmation (SU) selon la revendication 5, dans laquelle l'unité de programmation (SU) est en outre configurée pour
recevoir (224) une indication de fin par le biais du canal de commande de liaison montante (UCCH) depuis l'unité de terminal (TU1 ; TU2) ;
réserver exclusivement (242) une pluralité de troisièmes ressources radio (A, B, C) en fonction de la première exigence de QoS reçue ; et
transmettre (226) un message de commande de programmation de liaison descendante par le biais d'un canal de commande de liaison descendante (DCCH) à l'unité de terminal (TU1 ; TU2) en réponse à l'indication de fin transmise, le message de commande de programmation de liaison descendante indiquant une pluralité de troisièmes ressources radio à usage exclusif (A, B, C) du canal radio partagé (SRCH).

7. Procédé de fonctionnement d'une unité de programmation (SU) d'un réseau radio cellulaire (CRN) pour une communication M2M sans fil, le procédé comprenant :
la réception (204) d'une première exigence de QoS par le biais d'un canal de commande de liaison montante (UCCH) depuis une unité de terminal (TU1 ; TU2) ;
l'usage exclusif (230) d'une pluralité de premières ressources radio (A, B, C) en fonction de la première exigence de QoS reçue ; et
la transmission (206) d'un message de commande de programmation de liaison descendante par le biais d'un canal de commande de liaison descendante (DCCH) à l'unité de terminal (TU1 ; TU2) en réponse à la première exigence de QoS reçue, le message de commande de programmation de liaison descendante indiquant une pluralité de premières ressources radio à usage exclusif (A, B, C) d'un canal radio partagé (SRCH) ;
la réception (212) d'une seconde exigence de QoS temporairement réduite par le biais du canal de commande de liaison montante (UCCH) depuis l'unité de terminal (TU1) ;
l'usage exclusif (232) d'une pluralité de deuxièmes ressources radio (B, C) en fonction de la seconde exigence de QoS reçue ;
la transmission (214) d'un message de commande de programmation de liaison descendante par le biais d'un canal de commande de liaison descendante (DCCH) à l'unité de terminal (TU1) en réponse à la seconde exigence de QoS reçue, le message de commande de programmation de liaison descendante indiquant la pluralité de deuxièmes ressources radio à usage exclusif (B, C) du canal radio partagé (SRCH) ;
la réception (212) d'une période temporelle (T) par le biais du canal de commande de liaison montante (UCCH) depuis l'unité de terminal (TU1) ;
la détermination (238) d'une fin de la période temporelle (T) reçue ;
l'usage exclusif (240) d'une pluralité de quatrièmes ressources radio (A, B, C) en fonction de la première exigence de QoS reçue ; et
la transmission (234) d'un message de commande de programmation de liaison descendante par le biais d'un canal de commande de liaison descendante (DCCH) à l'unité de terminal (TU1 ; TU2) après l'écoulement de la période temporelle (T), le message de commande de programmation de liaison descendante indiquant une pluralité de quatrièmes ressources radio à usage exclusif (A, B, C) du canal radio partagé (SRCH).
